# EUROPEAN PATENT APPLICATION

(11) **EP 0 725 099 A1**
(43) Date of publication of application: **07.08.1996**
(21) Application number: 96300784.4
(22) Date of filing: 06.02.1996
(51) Int. Cl.: C08G 69/10, C08G 69/48

(54) **Method of preventing coloring of a water-soluble polyamino acid or of a salt thereof**

(30) Priority: 06.02.1995 JP 17811/95
(71) Applicant: Ajinomoto Co., Inc., Tokyo 104 (JP)
(72) Inventor: Hattori, Tatsuya, c/o Cent. Res. Lab., Kawasaki-shi, Kanagawa-ken (JP); Mori, Kenichi, c/o Cent. Res. Lab., Kawasaki-shi, Kanagawa-ken (JP)
(74) Representative: Nicholls, Kathryn Margaret

(57) **Abstract**

A method is provided for decoloring or for preventing or inhibiting coloring of an aqueous solution of a water-soluble polyamino acid or salt thereof prepared by heat polymerization and for improving storage stability thereof. The method involves adding a sulfite to an aqueous solution of a water-soluble polyamino acid or salt thereof prepared by heat polymerization.

## Description

The present invention relates to a method for preventing or inhibiting coloring of a water-soluble polyamino acid or salt thereof prepared by thermal polymerization. It also relates to a method of decoloring a solution of such a polyamino acid or salt thereof.

Many polyamino acids have been synthesized, and use of water-soluble ones in cosmetic, toiletry or detergent compositions has been studied. It is known that polyamino acids can be prepared by thermal polymerization of amino acids. Especially, polyaspartate can be easily prepared by heating aspartic acid to produce polysuccinimide and then hydrolyzing it. Such a thermal polymerization method is very simple. However, since the polymerization is carried out at a high temperature, coloring of the polymer usually occurs, and it is very difficult to prevent the coloring. U. S. Patent No. 5,292,864 discloses a method for decolorizing a polyaspartic acid polymer prepared by thermal condensation using a decolorizing agent selected from the group consisiting of hypochlorite, chlorine, chlorine dioxide, hydrogen peroxide, peroxydicarbonate or ozone. However, so far as we have confirmed, this method indeed can allow decoloring, but coloring occurs again during storage of this aqueous solution.

The present inventors have found that addition of a sulfite or hydrogen sulfite to an aqueous solution of a water-soluble polyamino acid or salt thereof prepared by thermal polymerization prevents or inhibits coloring of the polyamino acid or its salt during storage.

The water-soluble polyamino acid which is used in the present invention is prepared by thermal polymerization. It can ordinarily be obtained by heating a powder of an amino acid at a temperature of from approximately 170 to 290°C and subjecting it to hydrolysis or the like as required. The heating is conducted at atmospheric pressure or at reduced pressure and in the presence of an inert solvent such as a hydrocarbon or the like. Phosphoric acid may be added to the solvent. Such processes are described in, for example, J. Org. Chem., 26, 1084 (1961), J. Med. Chem., 16, 893 (1973), Bul. Chem. Soc. Jpn, 51, 1555 (1978), J. Am. Chem. Soc., 80, 2694 (1958), J. Am. Chem. Soc., 82, 3745 (1960), and Japanese Laid-Open Patent Application (Kokai) No. 203,636/1985.

Examples of the amino acids constituting the polyamino acid include glycine, alanine, leucine, valine, phenylalanine, proline, serine, threonine, lysine, arginine, aspartic acid, and glutamic acid. Preferably, the polyamino acid is a homopolymer of aspartic acid or a copolymer of aspartic acid and another amino acid. The molecular weight of the polymer is not particularly limited. Preferably the polymer having a molecular weight of from 500 to 50,000 (degree of polymerization - from 4 to 430), more preferably, a molecular weight of from 1,000 to 10,000 (degree of polymerization - from 8 to 90) is excellent in terms of an effect of preventing coloring. The side chain of the amino acid may be modified through amidation, esterification or the like.

Examples of the salts include salts with alkali metals such as sodium and potassium, salts with organic amines such as diethanolamine and triethanol amine, and salts with basic amino acids such as arginine and lysine.

The concentration of the aqueous solution of the water-soluble polyamino acid salt is not particularly limited. It is usually between 0.05 and 40% by weight.

Examples of the sulfite or hydrogen sulfite include lithium sulfite, sodium sulfite, potassium sulfite, ammonium sulfite, sodium hydrogen sulfite, and potassium hydrogen sulfite. Sodium sulfite and potassium sulfite are especially preferable. The amount of the sulfite is between 0.05 and 10% by weight, preferably between 0.5 and 5% by weight based on the polyamino acid salt.
The addition of the sulfite is effective not only for prevention or inhibition of coloring but also for decoloring. The aqueous solution of the water-soluble polyamino acid or salt thereof which is used in the present invention may be decolored with hypochlorite, chlorine, chlorine dioxide, hydrogen peroxide, peroxydicarbonate or ozone or the like before the addition of the sulfite.

The aqueous solution of the water-soluble polyamino acid or salt thereof which is used in the present invention may contain, other than the above-mentioned essential ingredients, additives which are ordinarily used in a toiletry or detergent composition, such as a surfactant, a higher alcohol, hydrocarbons, a wetting agent, a pH adjustor, an antiseptic, a flavor and a pigment unless the effects of the present invention are impaired.

### Examples

Embodiments of the present invention will be illustrated more specifically by referring to the following Examples.

### Preparation Example

L-aspartic acid (266 g) was added to 400 g of n-paraffin, and the reaction was conducted at 230°C for 5 hours. Polysuccinimide formed was collected by filtration, and dissolved in 730 g of 12% sodium hydroxide aqueous solution to give 30% sodium polyaspartate aqueous solution (pH 12, molecular weight of polyaspartic acid - approximately 3,500).

### Test Example

The effect of preventing coloring was evaluated using the 30% sodium polyaspartate aqueous solution given in the above-mentioned Preparation Example. Sodium sulfite in an amount shown in Table 1 was added to 100 g of the 30% sodium polyaspartate aqueous solution (when the treatment with sodium persulfate was conducted, the reaction was carried out at 45°C for 1 hour), and pH was adjusted to 8.0 with 1-N hydrochloric acid. Then, the resulting solution was stored at 40°C for 30 days. The degree of coloring before and after the storage was measured using a Gardener color scale. For comparison, solutions without sodium sulfite and solutions with added sodium thiosulfate were used. The results are summarized in Table 1.

**Table 1**

| | 1 | 2 | 3 | 4 | 5 | 6 | 7 |
|---|---|---|---|---|---|---|---|
| Treatment with Na₂C₂O₆ (g) | - | - | - | 0.5 | - | - | - |
| Treatment with Na₂S₂O₈ (g) | - | 0.5 | - | - | - | 0.3 | 0.2 |
| Na₂SO₃ (g) | - | - | - | - | 1.0 | 0.3 | 0.1 |
| Na₂S₂O₃ (g) | - | - | 1.0 | - | - | - | - |
| Color scale before storage | 12 | 5 | 12 | 5 | 8 | 5 | 6 |
| Color scale after storage | 15 | 9 | 15 | 8 | 8 | 5 | 7 |
| | | | | | | | |

From the results of Table 1, it becomes clear that the solutions containing sodium sulfite suppresses coloring of the solution, and that the addition of sodium sulfite is also effective for decoloring.

### Use Example

A hair treatment having the following formulation was prepared. This treatment was scarcely colored even after storage at 40°C for 30 days.

| | |
|---|---|
| distearyldimethylammonium chloride | 1 |
| POE (20) stearyl ether | 1 |
| sodium polyaspartate (molecular weight 4200) | 1 |
| sodium sulfite | 0.05 |
| stearyl alcohol | 4 |
| glycerin | 5 |
| isocetyl isostearate | 1 |
| silicone oil | 1 |
| methylparaben | 0.2 |
| flavor | 0.2 |
| purified water | balance |

### Effects of the invention

The present invention can prevent coloring of an aqueous solution of a water-soluble polyamino acid salt prepared by thermal polymerization and improve storage stability thereof.

## Claims

1. A method for decoloring or for preventing or inhibiting coloring of a water-soluble polyamino acid or salt thereof prepared by thermal polymerization comprising adding a sulfite or hydrogen sulfite to an aqueous solution of the polyamino acid or salt thereof.

2. The method of claim 1, wherein the water-soluble polyamino acid is polyaspartic acid.

3. The method of claim 1, wherein the sulfite is selected from the group consisting of lithium sulfite, sodium sulfite, potassium sulfite, ammonium sulfite, sodium hydrogen sulfite and potassiumu hydrogen sulfite.

4. The method of claim 1, wherein the amount of the sulfite is between 0.05 and 10 % by weight based on the polyamino acid or salt thereof.
